# EUROPÄISCHE PATENTSCHRIFT

(11) **EP 3 491 454 B1**
(45) Veröffentlichungstag und Bekanntmachung des Hinweises auf die Patenterteilung: **10.06.2020**
(21) Anmeldenummer: 17743334.9
(22) Anmeldetag: 25.07.2017
(51) Int. Cl.: G02C 5/22

(54) **SCHRAUBTEIL SOWIE SCHARNIERANORDNUNG MIT EINEM SOLCHEN SCHRAUBTEIL**
SCREW PART AND HINGE ARRANGEMENT HAVING SUCH A SCREW PART
ÉLÉMENT DE VISSAGE ET ENSEMBLE CHARNIÈRE COMPRENANT UN TEL ÉLÉMENT DE VISSAGE

(30) Priorität: 26.07.2016 DE 102016213651
(43) Veröffentlichungstag der Anmeldung: 05.06.2019
(73) Patentinhaber: OBE GmbH & Co. KG, 75228 Ispringen (DE)
(72) Erfinder: BERTSCH, Stefan, 71665 Vaihingen an der Enz (DE)
(74) Vertreter: Kordel, Mattias
(86) Internationale Anmeldenummer: PCT/EP2017/068796
(87) Internationale Veröffentlichungsnummer: WO 2018/019851

(56) Entgegenhaltungen:
- DE-A1- 19 931 837
- US-A- 4 076 394

## Beschreibung

Die Erfindung betrifft ein Schraubteil und eine Scharnieranordnung mit einem solchen Schraubteil. Aus der DE 199 31 837 A1 ist eine Schraubverbindung für Scharnierteile bekannt.

Insbesondere zur Verbindung von Brillenteilen miteinander, beispielsweise zur Verbindung eines Mittelteils einer Brille mit einem Brillenbügel, sind Schraubteile bekannt, die einen Schaft aufweisen, der in einem Gewindeabschnitt zumindest bereichsweise wenigstens einen Außengewindegang aufweist. Dabei ist eine Hülse vorgesehen, welche den Schaft in einem Hülsenabschnitt in Umfangsrichtung gesehen umgreift. Diese Hülse weist eine glatte äußere Umfangsfläche auf und ist auf eine Bohrung, in welche das Schraubteil bestimmungsgemäß zur Verbindung zweier Teile, insbesondere zweier Teile einer Scharnieranordnung, eingeführt wird, derart abgestimmt, dass sich zunächst - beim Einführen des Schraubteils - kein oder nur ein verschwindendes Reibmoment einstellt. Beim Eindrehen des Schraubteils in ein Innengewinde gelangt auch die Hülse an einem distalen Ende in Eingriff mit dem Innengewinde, sodass sie zumindest bereichsweise gestaucht wird. Durch die hieraus resultierende Ausdehnung der Hülse in radialer Richtung gesehen einerseits und das Eingreifen der Hülse in das Gewinde andererseits entsteht ein Reibmoment, mit dem beispielsweise eine Leicht- oder Schwergängigkeit einer Scharnieranordnung, welche das Schraubteil aufweist, eingestellt werden kann. Dabei zeigt sich allerdings, dass das Reibmoment in der Praxis kaum definiert einstellbar ist. Bei der Fertigung der Hülse ergeben sich notwendig Toleranzen mit Blick auf deren Erstreckung in Längsrichtung des Schafts, sodass der Eingriff in das Gewinde abhängig von der konkret vorliegenden Länge variiert, womit auch das Reibmoment letztlich variiert. Dies kann bei einer Brillenanwendung beispielsweise dazu führen, dass ein Brillenbügel relativ zu einem Mittelteil der Brille in unerwünschter Weise fällt, weil das Reibmoment zu klein ist, oder dass der Bügel zu schwergängig ist, wenn das Reibmoment zu groß ist. Hinzu kommt, dass das Schraubteil schwer handhabbar ist, insbesondere weil es vor dem Festschrauben aus der Bohrung ungehindert wieder herausfallen kann, da das Reibmoment erst beim Verschrauben entsteht.

Der Erfindung liegt die Aufgabe zugrunde, ein Schraubteil und eine Scharnieranordnung zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Schraubteil geschaffen wird, welches einen Schaft aufweist, der in einem Gewindeabschnitt zumindest bereichsweise wenigstens einen Außengewindegang aufweist. Das Schraubteil weist außerdem eine Hülse auf, welche den Schaft - in Umfangsrichtung gesehen - um mehr als drei Viertel des Umfangs umgreift. Die Hülse erstreckt sich in Längsrichtung des Schafts entlang eines Hülsenabschnitts. Dabei ist vorgesehen, dass die Hülse an einer äußeren Umfangsfläche wenigstens eine radiale Erhebungsstruktur aufweist. Die wenigstens eine radiale Erhebungsstruktur weist wenigstens ein in radialer Richtung elastisch ausgebildetes Strukturelement auf, wobei sie ferner eine Erstreckung entlang der Längsrichtung auf der äußeren Umfangsfläche der Hülse aufweist, die größer ist als eine Breite des wenigstens einen Strukturelements, vorzugsweise größer als eine Breite der Erhebungsstruktur. Das Schraubteil weist Vorteile im Vergleich zum Stand der Technik auf. Insbesondere stellt die radiale Erhebungsstruktur - anders als eine glatte Umfangsfläche - bereits beim Einführen des Schraubteils in eine Bohrung ein Reibmoment bereit, welches mit großer Genauigkeit durch die spezifische Ausgestaltung der radialen Erhebungsstruktur definiert sein kann. Bei der Definition des Reibmoments kommt es insbesondere auf die Form und Anordnung der radialen Erhebungsstruktur an der Umfangsfläche, sowie gegebenenfalls auf die Anzahl an radialen Erhebungsstrukturen an, wobei die genaue Längserstreckung der Hülse einen geringeren Einfluss auf das Reibmoment hat. Daher fallen Toleranzen bezüglich der Längserstreckung der Hülse höchstens in geringerem Maße ins Gewicht, was eine präzise und eng tolerierte Einstellung des Reibmoments ermöglicht. Insbesondere kann das Reibmoment durch die Ausgestaltung der wenigstens einen radialen Erhebungsstruktur so gewählt werden, dass es einer Stauchung der Hülse und/oder eines Eingriffs in ein Innengewinde durch die Hülse nicht mehr bedarf. Gleichwohl kann zusätzlich eine solche Stauchung und/oder ein solcher Eingriff vorgesehen sein. Mithilfe der radialen Erhebungsstruktur ist es auch möglich, Unrundheiten einer Bohrung, in welche das Schraubteil eingeführt wird, auszugleichen. Die radiale Erhebungsstruktur ist außerdem elastischer, als es die Hülse wäre, wenn nur ihr Durchmesser - bei im Übrigen glatter Umfangsfläche - vergrößert würde. Insgesamt wird mit der wenigstens einen radialen Erhebungsstruktur eine Möglichkeit geschaffen, ein definiertes Reibmoment bei verbessertem Toleranzausgleich einzustellen, wodurch es insbesondere möglich wird, dass ein derart an einem Mittelteil einer Brille befestigter Brillenbügel weder fällt, noch zu schwergängig betätigbar ist. Das Reibmoment des hier vorgeschlagenen Schraubteils weist auch bei langfristiger Betätigung einer mit ihm ausgestatteten Scharnieranordnung eine deutlich verringerte Ermüdung auf, wobei insbesondere das ein Fallen eines Brillenbügels verhindernde Reibmoment in deutlich geringerem Maße mit der Zeit abnimmt, als dies aus dem Stand der Technik bekannt ist.

Der Anwendungsbereich des Schraubteils ist keinesfalls auf eine Scharnieranordnung beschränkt. Allgemein kann das Schraubteil mit oder an einer beliebig ausgestalteten Befestigungsanordnung verwendet werden, beispielsweise auch in einem Schließblock eines Brillengestells, aber auch außerhalb des Gebiets der Brillen.

Dass der Schaft wenigstens einen Außengewindegang aufweist, bedeutet insbesondere, dass dieser eine Gewindestruktur aufweisen kann, welche beispielsweise nur einen sich nur über einen bestimmten Abschnitt - insbesondere nicht über den vollständigen Umfang - erstreckenden Außengewindegang aufweisen kann. Es können auch mehrere, insbesondere in Umfangsrichtung zueinander versetzte Teil-Außengewindegänge vorgesehen sein. Selbstverständlich ist es auch möglich, dass der Schaft ein Außengewinde aufweist, welches zumindest bereichsweise durchgängig an dem Schaft vorgesehen ist, wie dies beispielsweise bei einer gängigen Schraube der Fall ist.

Dass die Hülse den Schaft in Umfangsrichtung gesehen um mehr als drei Viertel des Umfangs umgreift, kann insbesondere bedeuten, dass die Hülse nicht geschlossen ausgebildet ist, wobei sie insbesondere einen in Längsrichtung verlaufenden Schlitz aufweisen kann. Sie ist dann in einfacher Weise an dem Schaft - beispielsweise durch Klipsen oder Aufstecken - anordenbar.

Besonders bevorzugt wird allerdings ein Ausführungsbeispiel, bei welchem die Hülse den Schaft - in Umfangsrichtung gesehen - vollständig umgreift. In diesem Fall ist die Hülse bevorzugt in Umfangsrichtung geschlossen ausgebildet.

Dass sich die Hülse in Längsrichtung des Schafts gesehen entlang eines Hülsenabschnitts erstreckt, bedeutet insbesondere, dass die Hülse den Schaft nicht entlang dessen gesamter Längserstreckung oder axialer Erstreckung umgreifen muss. Vielmehr ist bevorzugt vorgesehen, dass der Schaft mindestens einen Längsabschnitt aufweist, der frei von der Hülse ist, in welchem der Schaft die Hülse also nicht aufweist. Der Hülsenabschnitt ist demgegenüber derjenige Abschnitt des Schafts, in welchem der Schaft die Hülse aufweist oder trägt.

Unter einem Gewindeabschnitt wird entsprechend ein Abschnitt des Schafts verstanden, in dem der wenigstens eine Außengewindegang angeordnet ist. Es ist möglich, dass sich der Außengewindegang als Außengewinde über die gesamte Länge des Schafts erstreckt. Bevorzugt erstreckt sich der Gewindeabschnitt jedoch nur entlang eines Teils der gesamten Längserstreckung des Schafts. Der Hülsenabschnitt und der Gewindeabschnitt sind vorzugsweise - in Längsrichtung gesehen - versetzt zueinander angeordnet. Insbesondere ist bevorzugt vorgesehen, dass der Hülsenabschnitt - in Einschraubrichtung des Schraubteils in eine Gewindebohrung gesehen - hinter dem Gewindeabschnitt angeordnet ist. Dabei ist es möglich, dass der Hülsenabschnitt mit dem Gewindeabschnitt bereichsweise überlappt. Es ist aber auch möglich, dass sich der Hülsenabschnitt insbesondere unmittelbar - ohne Überlapp - an den Gewindeabschnitt anschließt. Schließlich ist es auch möglich, dass der Hülsenabschnitt von dem Gewindeabschnitt - in Längsrichtung gesehen - beabstandet ist.

Unter einer Längsrichtung oder Axialrichtung wird hier insbesondere eine Richtung verstanden, welche der Richtung der Längserstreckung des Schafts entspricht und insbesondere in Richtung einer Symmetrieachse des Schafts weist. Eine radiale Richtung steht senkrecht auf der Längsrichtung und schneidet diese. Eine Umfangsrichtung umgreift die Längsrichtung konzentrisch.

Unter einer äußeren Umfangsfläche der Hülse wird insbesondere eine Umfangsfläche verstanden, welche dem Schaft abgewandt ist, also an dem Schraubteil nach außen weist.

Die radiale Erhebungsstruktur kann genau ein Strukturelement aufweisen. In diesem Fall sind die radiale Erhebungsstruktur und das Strukturelement identisch, oder die radiale Erhebungsstruktur wird durch das Strukturelement gebildet. Es ist aber auch möglich, dass die wenigstens eine radiale Erhebungsstruktur eine Mehrzahl von elastisch ausgebildeten Strukturelementen aufweist, wobei in diesem Fall die radiale Erhebungsstruktur durch die Mehrzahl der ihr zugeordneten Strukturelemente gebildet wird.

Es ist möglich, dass die Hülse eine Mehrzahl radialer Erhebungsstrukturen aufweist. Besonders bevorzugt sind mehrere radiale Erhebungsstrukturen - in Umfangsrichtung gesehen - entlang der Umfangsfläche der Hülse verteilt angeordnet, insbesondere symmetrisch in gleichen Teilungsabständen voneinander, sodass unmittelbar benachbarte Erhebungsstrukturen bevorzugt gleiche Winkelabstände zueinander aufweisen. Dabei ist es möglich, dass die einzelnen radialen Erhebungsstrukturen entweder genau ein Strukturelement aufweisen oder aus einer Mehrzahl von Strukturelementen gebildet sind. Es ist insbesondere auch möglich, dass wenigstens eine erste radiale Erhebungsstruktur aus einem einzigen Strukturelement gebildet ist, wobei wenigstens eine zweite radiale Erhebungsstruktur aus einer Mehrzahl von Strukturelementen gebildet ist. Beispielsweise kann eine aus einem einzigen Strukturelement gebildete, erste Erhebungsstruktur eine sich in Axialrichtung erstreckende Rippe als Strukturelement aufweisen, wobei beispielsweise eine zweite Erhebungsstruktur, welche aus einer Mehrzahl von Strukturelementen gebildet ist, eine Mehrzahl benachbarter, punkt- oder noppenförmiger Erhebungen als radiale Strukturelemente aufweisen kann, wobei sich diese Anordnung der nebeneinander angeordneten Strukturelemente entlang der Längsrichtung auf der äußeren Umfangsfläche der Hülse erstreckt.

Unter einer Breite des wenigstens einen Strukturelements oder der Erhebungsstruktur wird insbesondere eine Erstreckung des Strukturelements oder der Erhebungsstruktur in einer Richtung verstanden, die senkrecht auf einer Richtung der längsten Ausdehnung der radialen Erhebungsstruktur steht, welcher das Strukturelement zugeordnet ist. Weist beispielsweise die radiale Erhebungsstruktur eine längste Erstreckung in Axial- oder Längsrichtung auf, erstreckt sich die Breite des wenigstens einen Strukturelements oder der radialen Erhebungsstruktur insbesondere in Umfangsrichtung. Die längste Erstreckung der wenigstens einen radialen Erhebungsstruktur erstreckt sich stets bevorzugt zumindest im Wesentlichen in Längsrichtung, wobei die radiale Erhebungsstruktur beispielsweise auch einen schraubenförmigen, gewendelten oder schrägen Verlauf aufweisen kann.

Gemäß einem bevorzugten Ausführungsbeispiel ist das Schraubteil als Schraube ausgebildet, insbesondere als Schraube, deren Schaft an einem ersten Ende einen Kopf aufweist. An einem zweiten, dem Kopf abgewandten Ende, weist die Schraube vorzugsweise den Gewindeabschnitt auf. Der Hülsenabschnitt ist bevorzugt zwischen dem ersten, den Kopf aufweisenden Ende und dem zweiten, den Gewindeabschnitt aufweisenden Ende angeordnet. Es ist möglich, dass die Hülse in den Gewindeabschnitt hineinragt und das Gewinde teilweise überdeckt, wobei dann der Hülsenabschnitt einerseits und der Gewindeabschnitt andererseits bereichsweise überlappen.

An dem Kopf ist vorzugsweise ein Drehmomenteinleitungsmittel angeordnet, beispielsweise ein Schlitzeingriff, ein Kreuzschlitzeingriff, ein sternförmiger Eingriff, ein Torx-Eingriff, oder dergleichen.

Es ist auch möglich, dass das Schraubteil als Gewindestift oder als Madenschraube ausgebildet ist. In diesem Fall weist das Schraubteil bevorzugt keinen Kopf auf. Weiterhin ist es möglich, dass das Schraubteil als Stehbolzen ausgebildet ist. Bei einem Stehbolzen handelt es sich insbesondere um einen mit einem weiteren Element fest verbundenen oder verbindbaren Gewindestift, der beispielsweise als Schweißbolzen ausgebildet sein kann. Auch andere Ausgestaltungen des Schraubteils sind möglich.

Bevorzugt ist das Schraubteil eingerichtet zur Verbindung zweier Brillenteile miteinander, insbesondere zur Verwendung in einer Scharnieranordnung zwischen einem ersten Brillenteil und einem zweiten Brillenteil, insbesondere zwischen einem Mittelteil einer Brille und einem Brillenbügel. Es ist dann insbesondere möglich, dass das Schraubteil einen metrischen Nenndurchmesser von mindestens M 1,2 bis höchstens M 1,6, vorzugsweise von M 1,4 aufweist. Die Erfindung ist aber keinesfalls auf eine solche Ausgestaltung des Schraubteils beschränkt. Vielmehr ist die hier vorgeschlagene Ausgestaltung des Schraubteils auch bei anderen, insbesondere größeren Schraubteilen anwendbar. In Zusammenhang mit Brillenteilen ergeben sich allerdings die hier beschriebenen Vorteile in besonderer Weise.

Das Schraubteil kann insbesondere auch für einen Schließblock eines Brillengestells verwendet werden, aber auch außerhalb des technischen Gebiets der Brillengestelle.

Gemäß einer Weiterbildung der Erfindung ist vorgesehen, dass sich die wenigstens eine Erhebungsstruktur entlang von wenigstens zwei Dritteln der in Längsrichtung gemessenen Höhe der Hülse erstreckt. Auf diese Weise kann gewährleistet werden, dass durch die wenigstens eine Erhebungsstruktur sehr effektiv ein Reibmoment in einer Bohrung, welche das Schraubteil aufnimmt, erzeugt wird.

Gemäß einer Weiterbildung der Erfindung ist vorgesehen, dass sich die wenigstens eine Erhebungsstruktur vollständig über die gesamte - in Längsrichtung gemessene - Höhe der Hülse erstreckt. Dies ermöglicht eine besonders effektive Bereitstellung des Reibmoments.

Gemäß einer Weiterbildung der Erfindung ist vorgesehen, dass die wenigstens eine Erhebungsstruktur eine sich in Längsrichtung erstreckende Rippe aufweist. Insbesondere ist es möglich, dass die wenigstens eine Erhebungsstruktur aus einer sich in Längsrichtung erstreckenden Rippe besteht. Die Rippe bildet dann ein einziges Strukturelement, welches die wenigstens eine radiale Erhebungsstruktur bildet.

Alternativ oder zusätzlich ist es möglich, dass wenigstens eine Erhebungsstruktur eine Mehrzahl von Noppen aufweist. Unter einer Noppe wird dabei insbesondere eine bezüglich ihrer Umrandung im Wesentlichen kreisförmige, vorzugsweise kreisförmige Erhebung verstanden, die bevorzugt halbkugelförmig, teilkugelförmig oder kugelabschnittsförmig ausgebildet sein kann. Die Noppen bilden in diesem Fall Strukturelemente, welche die wenigstens eine Erhebungsstruktur gemeinsam ausbilden.

Alternativ oder zusätzlich ist es möglich, dass wenigstens eine Erhebungsstruktur eine gerade, spindel- oder schraubenförmige oder konische Erhebung als Strukturelement aufweist. Das Strukturelement kann also insbesondere auch eine gewendelte oder schraubenförmige Erhebung sein. Eine gerade Erhebung kann insbesondere als Rippe ausgebildet sein. Weiter ist es möglich, dass eine als Rippe ausgebildete Erhebungsstruktur als Halbzylinder oder Teilzylinder, oder als Halbkonus oder Teilkonus, insgesamt also zylindrisch oder konisch, ausgebildet ist.

Alternativ oder zusätzlich ist es möglich, dass das wenigstens eine Strukturelement der wenigstens einen Erhebungsstruktur - im Querschnitt gesehen, wobei die Längsrichtung und/oder die längste Erstreckung des Strukturelements auf der Querschnittsebene senkrecht steht/stehen - eine gerundete, insbesondere teilzylindrische, teilkonische oder teilsphärische, oder aber auch eine eckige, insbesondere mehreckige, Kontur aufweist. Das wenigstens eine Strukturelement kann eine solche Kontur vorzugsweise zusätzlich oder alternativ auch im Längsschnitt aufweisen.

Gemäß einer Weiterbildung der Erfindung ist vorgesehen, dass die Hülse an ihrer äußeren Umfangsfläche eine Mehrzahl von Erhebungsstrukturen aufweist, wobei die Erhebungsstrukturen bevorzugt symmetrisch - insbesondere in gleichen Winkelabständen zueinander - entlang einer Umfangslinie der Hülse angeordnet sind. Insbesondere mittels einer Mehrzahl von Erhebungsstrukturen sind Unrundheiten in einer Bohrung, in welcher das Schraubteil eingreift, ohne weiteres ausgleichbar, weil die verschiedenen Erhebungsstrukturen in verschiedener Weise radial gestaucht werden können.

Bevorzugte Ausführungsbeispiele des Schraubteils weisen drei, vier, sechs, acht oder eine andere Zahl von Erhebungsstrukturen an der äußeren Umfangsfläche der Hülse auf. Wohlgemerkt kann jede Erhebungsstruktur aus genau einem Strukturelement gebildet sein oder auch mehrere Strukturelemente aufweisen.

Gemäß einer Weiterbildung der Erfindung ist vorgesehen, dass die Hülse insgesamt elastisch ausgebildet ist. Besonders bevorzugt ist die Hülse insgesamt aus einem elastischen Material gefertigt. Besonders bevorzugt ist vorgesehen, dass die Hülse einstückig mit der wenigstens einen Erhebungsstruktur ausgebildet ist. Die elastischen Eigenschaften der Erhebungsstruktur und auch der Hülse insgesamt, die zum Toleranzausgleich, zum Ausgleich von Unrundheiten und zur Erzielung eines Reibmoments bereits beim Einbringen des Schraubteils in eine Bohrung dienen, werden in besonders geeigneter und wirksamer Weise bereitgestellt, wenn die Hülse insgesamt elastisch ausgebildet ist, insbesondere wenn sie einstückig mit der wenigstens einen Erhebungsstruktur aus einem elastischen Material gefertigt ist.

Besonders bevorzugt ist vorgesehen, dass die Hülse wenigstens einen Kunststoff aufweist oder aus wenigstens einem Kunststoff besteht. Besonders bevorzugt weist die Hülse ein Elastomer auf oder besteht aus einem Elastomer.

Gemäß einer Weiterbildung der Erfindung ist vorgesehen, dass der Schaft in dem Hülsenabschnitt mit der Hülse umspritzt ist. Die Hülse wird bevorzugt an dem Schaft durch Kunststoffspritzgießen angeordnet. Dabei wird der Schaft in dem Hülsenabschnitt mit der Hülse umspritzt. Der Schaft weist vor dem Anspritzen der Hülse in dem Hülsenabschnitt bevorzugt eine Anspritzgeometrie auf. Insbesondere springt der Schaft in dem Hülsenabschnitt bevorzugt - in radialer Richtung gesehen - zurück. Zusätzlich oder alternativ ist in dem Hülsenabschnitt an dem Schaft bevorzugt eine haftungserhöhende Struktur, beispielsweise in Form von Rillen oder andersartigen Erhebungen und/oder Vertiefungen vorgesehen, welche eine Haftung des Materials der Hülse in dem Hülsenabschnitt an dem Schaft verbessert.

Es zeigt sich, dass die Hülse bevorzugt bis in den Gewindeabschnitt des Schafts hineingespritzt wird, sodass der Hülsenabschnitt und der Gewindeabschnitt nach dem Spritzen der Hülse bereichsweise überlappen. Dabei zeigt sich weiter, dass ein Spritzgusswerkzeug im Bereich des Gewindes nur sehr schwer abzudichten ist, sodass letztlich die axiale Erstreckung der Hülse auf dem Schaft nicht gut definierbar ist, sodass Toleranzen bezüglich der tatsächlichen Längserstreckung der Hülse auftreten. Bei herkömmlichen Schraubteilen der eingangs angesprochenen Art ist dies kritisch, da hier das Reibmoment letztlich durch Stauchen der Hülse beim Einschrauben des den Gewindeabschnitt überlappenden Hülsenteils in ein Innengewinde erzeugt wird. Bei dem hier vorgeschlagenen Schraubteil spielen diese Toleranzen dagegen keine relevante Rolle mehr, da das gewünschte Reibmoment jedenfalls im Wesentlichen bereits durch die wenigstens eine radiale Erhebungsstruktur bereitgestellt wird, sodass auf den Rückstaucheffekt gegebenenfalls sogar ganz verzichtet werden kann, oder dieser höchstens von zweitrangiger Bedeutung ist.

Diese Überlegung führt zu einem weiteren Vorteil des hier vorgeschlagenen Schraubteils: Da es letztlich auf eine Stauchung im Innengewinde beim Einschrauben des Schraubteils nicht mehr ankommt, da die wenigstens eine radiale Erhebungsstruktur zu einem permanenten Reibmoment bereits beim Einführen des Schraubteils führt, kann ein und dasselbe Schraubteil ohne Längenanpassung für eine Mehrzahl von Anwendungen, insbesondere für verschieden breite Brillenscharniere, verwendet werden, ohne dass es einer Längenanpassung des Schraubteils und insbesondere der Hülse bedarf. Es ist nämlich möglich, einerseits auf den Rückstaucheffekt vollständig zu verzichten, sodass die Hülse gar nicht in ein Innengewinde eingreifen muss, andererseits ist es auch unschädlich, wenn die Hülse bei einer Anwendung ein wenig weiter in ein Innengewinde eingeschraubt wird als bei einer anderen Anwendung, da dies angesichts des permanenten Reibmoments, welches durch die wenigstens eine radiale Erhebungsstruktur bereitgestellt wird, eine geringere Rolle bei der Definition des Gesamtreibmoments spielt. Somit kann die Anzahl an vorzuhaltenden Schraubteilen für verschiedene Anwendungen, insbesondere also die Anzahl verschiedener Schraubteilvarianten, reduziert werden.

Es zeigt sich auch, dass der Hülsenabschnitt und der Gewindeabschnitt des Schraubteils nicht zwingend überlappen müssen. Vielmehr kann es auch sein, dass die Hülse nicht in den Bereich des Gewindes hineinragt.

Dadurch, dass die Hülse nicht auf den Rückstaucheffekt angewiesen ist, kann das Schraubteil häufiger wiederverwendet werden, da die Hülse entweder nicht im Bereich eines Innengewindes, in welches der Gewindeabschnitt des Schafts eingeschraubt wird, zerstört wird, oder weil gegebenenfalls eine solche Beschädigung für das zu erzielende Reibmoment von untergeordneter Bedeutung ist.

Gemäß einer Weiterbildung der Erfindung ist vorgesehen, dass der Schaft des Schraubteils wenigstens einen Kunststoff aufweist oder aus Kunststoff besteht, oder dass der Schaft wenigstens ein Metall oder wenigstens eine Metalllegierung aufweist oder aus einem Metall oder einer Metalllegierung besteht. Der Schaft des Schraubteils - und damit quasi dessen Grundkörper - kann also metallisch oder aus Kunststoff gefertigt sein.

Gemäß einer Weiterbildung der Erfindung ist vorgesehen, dass die Hülse in den Gewindeabschnitt des Schafts hineinragt. Dabei schließt sich der Gewindeabschnitt des Schafts insbesondere an den Hülsenabschnitt des Schafts an, wobei die Hülse mit dem Gewindeabschnitt überlappt. In diesem Fall ist eine bereits beschriebene axiale Stauchung der Hülse beim Einschrauben des Außengewindegangs des Schafts in ein Innengewinde möglich, wodurch ein zusätzliches Reibmoment zu dem durch die wenigstens eine radiale Erhebungsstruktur bereitgestellten permanenten Reibmoment bereitgestellt werden kann. Es ist aber auch möglich, dass die Hülse nicht in den Gewindeabschnitt des Schafts hineinragt, wie dies bereits beschrieben wurde.

Die Aufgabe wird auch gelöst, indem eine Scharnieranordnung geschaffen wird, welche ein erstes, eine Gewindebohrung aufweisendes Scharnierteil, sowie ein zweites, eine Durchgangsbohrung aufweisendes Scharnierteil aufweist, wobei die Durchgangsbohrung und die Gewindebohrung eingerichtet sind, um in montiertem Zustand der Scharnieranordnung miteinander zu fluchten. Die Scharnieranordnung weist ein Schraubteil nach einem der zuvor beschriebenen Ausführungsbeispiele auf, wobei der wenigstens eine Außengewindegang des Schraubteils eingerichtet ist, um mit einem Innengewinde der Gewindebohrung zu kämmen, und wobei die Hülse eingerichtet ist, um in Reibkontakt mit der Durchgangsbohrung zu sein, wenn der Hülsenabschnitt des Schraubteils in die Durchgangsbohrung eingeführt ist. In vorteilhafter Weise wird dabei insbesondere bereits ein permanentes Reibmoment erzeugt, sobald das Schraubteil mit dem Hülsenabschnitt in die Durchgangsbohrung eingreift, welches über die geometrische Ausgestaltung der Hülse und insbesondere der wenigstens einen Erhebungsstruktur definiert eingestellt werden kann. Es bedarf dann keines Rückstaucheffekts der Hülse in der Gewindebohrung, obgleich diese zusätzlich hinzutreten kann. Durch die seitliche Anlage der Hülse in der Durchgangsbohrung entsteht eine stetige Verbindung. Aufgrund des permanenten Reibmoments, welches die wenigstens eine Erhebungsstruktur bereitstellt, kann - im Vergleich zu einer Hülse mit glatter Umfangsfläche - ein gleich hohes Reibmoment innerhalb der Scharnieranordnung bei verringertem Anzugsmoment des Schraubteils verwirklicht werden. Dabei ermöglicht das Schraubteil im Gegensatz zu bekannten Schraubteilen ein einfacheres Regulieren des Reibmoments in der Scharnieranordnung. Weiterhin ist das Schraubteil schon beim Eindrücken in die Durchgangsbohrung gegen Verlieren gesichert. Es wird eine stetigere, gleichbleibende Reibung erzielt im Vergleich zu einer an der äußeren Umfangsfläche glatten Hülse.

Die Scharnierteile der Scharnieranordnung können in verschiedener Weise, insbesondere mit einer verschiedenen Zahl von Lappen ausgestaltet sein. Beispielsweise ist es möglich, dass das erste Scharnierteil zweilappig und das zweite Scharnierteil einlappig ausgebildet ist. Es ist auch möglich, dass das erste Scharnierteil dreilappig und das zweite Scharnierteil zweilappig ausgebildet ist. Auch andere Kombinationen von Lappenzahlen für das erste Scharnierteil und das zweite Scharnierteil sind möglich. Es ist auch keinesfalls zwingend nötig, dass das erste Scharnierteil mehr Lappen aufweist als das zweite Scharnierteil. Vielmehr ist insbesondere auch eine umgekehrte Ausgestaltung oder eine gleiche Anzahl von Lappen möglich.

Unter einer Durchgangsbohrung wird insbesondere eine Bohrung verstanden, die frei ist von einem Innengewinde, die also kein Innengewinde aufweist und insofern nicht als Gewindebohrung ausgestaltet ist.

Insbesondere sind die Scharnierteile mit ihren Bohrungen so aufeinander abgestimmt, dass die Gewindebohrung des ersten Scharnierteils mit der Durchgangsbohrung des zweiten Scharnierteils in montiertem Zustand der Scharnieranordnung fluchtet. Weiter ist das Innengewinde der Gewindebohrung derart auf den wenigstens einen Gewindegang des Schraubteils abgestimmt, dass der wenigstens eine Außengewindegang in die Gewindebohrung eingreifen und mit dem Innengewinde kämmen kann.

Gemäß einer Weiterbildung der Erfindung ist vorgesehen, dass die Durchgangsbohrung und die Hülse so aufeinander abgestimmt sind, dass ein Reibmoment von mindestens 0,3 Ncm bis höchstens 1,0 Ncm, vorzugsweise von mindestens 0,3 Ncm bis höchstens 0,7 Ncm, vorzugsweise von 0,5 Ncm erreicht wird, wenn das Schraubteil mit der Hülse in die Durchgangsbohrung eingesteckt wird. Insbesondere wird dieses Reibmoment bereits vor einem Einschrauben des Gewindeabschnitts des Schraubteils in die Gewindebohrung erreicht, insbesondere allein durch die Anlage der wenigstens einen radialen Erhebungsstruktur der Hülse an einer inneren Umfangswandung der Durchgangsbohrung. Dabei kann sogar eine Erhöhung von ungefähr 10 % bis 15 % des Reibmoments im Vergleich zu dem Reibmoment erreicht werden, welches bei einem herkömmlichen Schraubteil erreicht wird, wenn die Hülse in dem Innengewinde der Gewindebohrung zurückgestaucht wird. Das Schraubteil und die Scharnieranordnung können allerdings so aufeinander abgestimmt sein, dass durch einen Rückstaucheffekt der Hülse in dem Innengewinde der Gewindebohrung ein zusätzliches Reibmoment hinzutritt, durch welches das hier angesprochene, permanente Reibmoment erhöht wird.

Die hier angegebenen Werte für das Reibmoment beziehen sich insbesondere auf ein Schraubteil und eine Scharnieranordnung, die im Brillenbereich angewendet werden, insbesondere also für Gewindegrößen von mindestens M 1,2 bis höchstens M 1,6, bevorzugt für M 1,4 (metrische Gewinde). Bei anderen Größen der Scharnieranordnung sowie des Schraubteils können andere Reibmomente erzielt werden, insbesondere bei größeren Schraubteilen und Scharnieranordnungen auch größere Reibmomente.

Gemäß einer Weiterbildung der Erfindung ist vorgesehen, dass die Durchgangsbohrung des Scharnierteils sowie die äußere Umfangsfläche der Hülse - außerhalb der wenigstens einen radialen Erhebungsstruktur - eine Toleranz von bis zu mindestens 3 % bis höchstens bis zu 6 %, vorzugsweise von bis zu mindestens 3 % bis höchstens bis zu 4 %, vorzugsweise von bis zu 3,5 % des Nenndurchmessers des Gewindes des Schraubteils aufweisen. Hierbei handelt es sich um eine relativ große Toleranz, die gleichwohl möglich ist, weil sie durch die wenigstens eine radiale Erhebungsstruktur ausgeglichen werden kann. Die Toleranz beträgt somit für eine metrische Schraube mit Nennmaß M 1,2 bis M 1,6, vorzugsweise M 1,4, bevorzugt ±0,05 mm. Dass die Toleranz an der äußeren Umfangsfläche der Hülse außerhalb der radialen Erhebungsstruktur bestimmt wird, bedeutet insbesondere, dass die Toleranz im Bereich eines kleinsten Durchmessers der Umfangsfläche der Hülse bestimmt wird, wo diese keine radiale Erhebungsstruktur aufweist. Insofern kann angenommen werden, dass die Hülse eine gedachte, zylindrische äußere Umfangsfläche aufweist, ausgehend von der sich die radiale Erhebungsstruktur radial nach außen erstreckt, wobei der Toleranzbetrachtung hier der Durchmesser dieser gedachten, zylindrischen äußeren Umfangsfläche zugrunde gelegt wird.

Gemäß einer Weiterbildung der Erfindung ist vorgesehen, dass die Hülse einerseits und die Scharnierteile der Scharnieranordnung andererseits so aufeinander abgestimmt sind, dass die Hülse beim Einschrauben des Außengewindegangs in die Gewindebohrung axial zumindest bereichsweise gestaucht wird. Hierdurch kann das ohnehin aufgrund der wenigstens einen radialen Erhebungsstruktur bestehende, permanente Reibmoment noch verstärkt werden, wie dies bereits zuvor erläutert wurde. Es ist aber auch möglich, dass ein solches Rückstauchen der Hülse vermieden wird, beispielsweise indem diese nicht mit dem wenigstens einen Außengewindegang überlappt.

Gemäß einer Weiterbildung der Erfindung ist vorgesehen, dass die Scharnieranordnung eingerichtet ist zur Verwendung bei einer Brille, insbesondere bei einem Brillengestell, besonders bevorzugt zur Verbindung eines Mittelteils einer Brille mit einem Brillenbügel. Mithilfe des hier vorgeschlagenen Schraubteils sowie der Scharnieranordnung können auch besonders breite Brillenbügel mit Mittelteilen einer Brille verbunden werden. Dabei bedarf es für verschiedene Ausgestaltungen, insbesondere für verschiedene Breiten von Brillenbügeln im Vergleich zu bekannten Schraubteilen einer verkleinerten Zahl von Schraubteilvarianten, weil es mit Blick auf die Längenanpassung des Schraubteils nicht darauf ankommt, ob und in welchem Umfang ein Rückstaucheffekt in einem Innengewinde der Gewindebohrung für die Hülse auftritt.

Gemäß einer Weiterbildung der Erfindung ist schließlich vorgesehen, dass das erste Scharnierteil mehrlappig ausgebildet ist. Es ist möglich, dass das zweite Scharnierteil einen Lappen weniger aufweist als das erste Scharnierteil. Insbesondere ist es möglich, dass das erste Scharnierteil zweilappig ausgebildet ist, wobei das zweite Scharnierteil einlappig ausgebildet ist. Wie bereits beschrieben, können aber ohne weiteres auch andere Anzahlen von Scharnierlappen für die Scharnierteile verwirklicht werden.

Die Erfindung umfasst auch ein Brillengestell, welches eine Scharnieranordnung nach einem der zuvor beschriebenen Ausführungsbeispiele oder ein Schraubteil nach einem der zuvor beschriebenen Ausführungsbeispiele aufweist. Das Brillengestell kann das Schraubteil beispielsweise auch als Befestigungsmittel an einem Schließblock aufweisen, der insbesondere vorgesehen ist, um Brillengläser in das Brillengestell einzuspannen. Mit Bezug auf das Brillengestell verwirklichen sich insbesondere die Vorteile, die bereits in Bezug auf das Schraubteil und die Scharnieranordnung erläutert wurden.

Die Erfindung wird im Folgenden anhand der Zeichnung näher erläutert. Dabei zeigen:
- Figur 1: eine schematische Darstellung eines Ausführungsbeispiels eines Schraubteils;
- Figur 2: eine schematische Darstellung eines Ausführungsbeispiels einer Scharnieranordnung mit dem Schraubteil gemäß Figur 1;
- Figur 3: eine schematische Querschnittsdarstellung des Ausführungsbeispiels der Scharnieranordnung gemäß Figur 2, und
- Figur 4: eine weitere schematische Darstellung des Ausführungsbeispiels der Scharnieranordnung gemäß den Figuren 2 und 3.

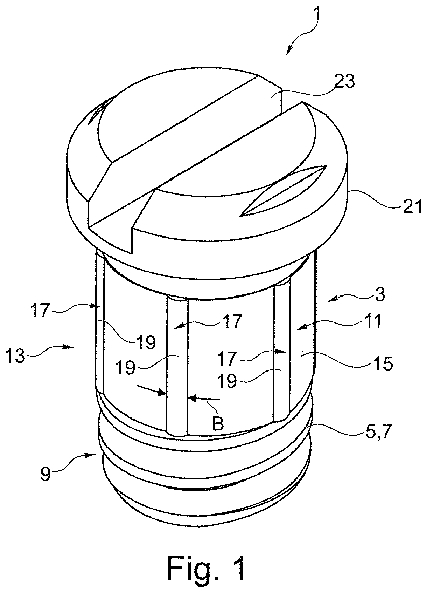

Figur 1 zeigt eine schematische Darstellung eines Ausführungsbeispiels eines Schraubteils 1, welches einen Schaft 3 aufweist, der zumindest bereichsweise wenigstens einen Außengewindegang 5, hier ein Außengewinde 7 in einem Gewindeabschnitt 9, aufweist. Ferner weist das Schraubteil 1 eine Hülse 11 auf, welche den Schaft 3 - in Umfangsrichtung gesehen - um mehr als drei Viertel seines Umfangs, hier vollständig, umgreift. Die Hülse 11 ist insbesondere - in Umfangsrichtung gesehen - geschlossen ausgebildet. Sie erstreckt sich - in Längsrichtung des Schafts 3 gesehen, welches hier eine vertikale Richtung in der Figur ist - entlang eines Hülsenabschnittes 13.

Die Hülse 11 weist an einer äußeren Umfangsfläche 15 wenigstens eine radiale Erhebungsstruktur, bei dem hier dargestellten Ausführungsbeispiel insbesondere sechs radiale Erhebungsstrukturen 17 auf, von denen in Figur 1 drei radiale Erhebungsstrukturen 17 dargestellt sind. Die anderen radialen Erhebungsstrukturen 17 sind in Figur 1 verdeckt. Die radialen Erhebungsstrukturen 17 weisen jeweils wenigstens ein in radialer Richtung elastisch ausgebildetes Strukturelement 19 auf, wobei hier insbesondere jede der radialen Erhebungsstrukturen 17 genau ein Strukturelement 19 aufweist, und wobei hier insbesondere die Strukturelemente 19 jeweils die radialen Erhebungsstrukturen 17 bilden. Alternativ ist es möglich, dass wenigstens eine der radialen Erhebungsstrukturen 17 eine Mehrzahl von Strukturelementen 19 aufweist oder aus einer Mehrzahl von Strukturelementen 19 gebildet ist. Die Strukturelemente 19 sind in radialer Richtung elastisch ausgebildet.

Die Erhebungsstrukturen 17 weisen eine Erstreckung entlang der Längsrichtung des Schraubteils 1 auf der äußeren Umfangsfläche 15 auf, die größer ist als eine Breite B der Strukturelemente 19. Dabei wird die Breite B senkrecht zur längsten Erstreckung der Strukturelemente 19 gemessen. Bei dem hier dargestellten Ausführungsbeispiel erstrecken sich die Strukturelemente 19 und damit auch die radialen Erhebungsstrukturen 17 insbesondere in Längsrichtung, das heißt in Figur 1 in vertikaler Richtung, wobei die Breite B der Strukturelemente 19 folglich in Umfangsrichtung gemessen wird.

Mittels der radialen Erhebungsstrukturen 17 ist es insbesondere möglich, dass die Hülse 11 bereits beim Einführen des Schraubteils 1 in eine Bohrung ein permanentes Reibmoment erzeugt, wodurch das Schraubteil 1 verliersicher in der Bohrung angeordnet werden kann, und wodurch es möglich wird, ein Reibmoment insbesondere einer Scharnieranordnung genauer und definierter einzustellen. Zugleich ermöglichen es die radialen Erhebungsstrukturen 17 in verstärktem Maße, Bohrungstoleranzen auszugleichen, wobei insbesondre auch Unrundheiten einer Bohrung, in welche das Schraubteil eingeführt wird, ausgeglichen werden können. Durch die stetige Anlage der Hülse 11 mit den Erhebungsstrukturen 17 an der Bohrung kann eine stetige Verbindung geschaffen werden.

Das hier dargestellte Schraubteil 1 ist insbesondere als Schraube ausgebildet, welche einen Kopf 21 aufweist. Der Kopf 21 weist wiederum ein Drehmomenteinleitungsmittel 23 auf, welches hier als Schlitz ausgebildet ist. Das Drehmomenteinleitungsmittel 23 kann auch als Kreuzschlitzeingriff, als Kreuzeingriff, als Torx-Eingriff oder dergleichen ausgebildet sein. Das Schraubteil 1 kann auch als Gewindestift, als Madenschraube, als Stehbolzen oder dergleichen ausgebildet sein.

Bei dem hier dargestellten Ausführungsbeispiel erstrecken sich die Erhebungsstrukturen 17 vollständig über die gesamte - in Längsrichtung gemessene - Höhe der Hülse 11. Alternativ ist es möglich, dass sich die Erhebungsstrukturen 17 nicht über die gesamte Höhe der Hülse 11 erstrecken, wobei sie sich aber bevorzugt zumindest entlang von wenigstens zwei Dritteln der Höhe der Hülse 11 erstrecken.

Die Erhebungsstrukturen 17 sind hier als Rippen ausgebildet beziehungsweise weisen jeweils eine Rippe als Strukturelement 19 auf, wobei sich die Rippen in Längsrichtung des Schraubteils 1 erstrecken. Alternativ ist es auch möglich, dass wenigstens eine der Erhebungsstrukturen 17 eine Mehrzahl von Noppen als Strukturelemente aufweist, oder dass wenigstens eine der Erhebungsstrukturen 17 gerade, spindel- oder schraubenförmig, oder konisch, insbesondere als gerade, spindel- oder schraubenförmige oder konische Erhebung, ausgebildet ist, oder ein als gerade, spindel- oder schraubenförmige oder konische Erhebung ausgebildetes Strukturelement 19 aufweist. Wenigstens eines der Strukturelemente 19 weist bevorzugt eine gerundete, insbesondere teilzylindrische, teilsphärische oder teilkonische, oder eckige, insbesondere mehreckige Kontur - insbesondere im Quer- und/oder Längsschnitt gesehen - auf. Die hier dargestellten Strukturelemente 19 weisen insbesondere eine teilzylindrische Kontur auf.

Die Erhebungsstrukturen 17 sind bei dem hier dargestellten Ausführungsbeispiel symmetrisch - das heißt insbesondere in gleichen Winkelabständen voneinander - entlang einer Umfangslinie der Hülse 11 angeordnet.

Bevorzugt ist die Hülse 11 insgesamt, das heißt als Ganzes, elastisch ausgebildet, wobei bevorzugt vorgesehen ist, dass die Erhebungsstrukturen 17 und/oder die Strukturelemente 19 einstückig mit der Hülse 11 ausgebildet sind.

Die Hülse 11 weist bevorzugt wenigstens einen Kunststoff auf oder besteht aus wenigstens einem Kunststoff.

Vorzugsweise ist der Schaft 3 des Schraubteils 1 in dem Hülsenabschnitt 13 mit der Hülse 11, insbesondere mit dem Material der Hülse 11, umspritzt. Das Schraubteil 1 mit der Hülse 11 wird also bevorzugt in einem Spritzgussverfahren, insbesondere in einem Kunststoffspritzgussverfahren, hergestellt. Dabei kommt es bei dem hier vorgeschlagenen Schraubteil 1 nicht mehr in entscheidender Weise auf Toleranzen bezüglich der Länge der Hülse 11 an, die sich aus einer nur unzureichend möglichen Abdichtung im Bereich des Gewindeabschnitts 9 ergeben, insbesondere da das Reibmoment, welches das Schraubteil 1 in einer Bohrung aufweist, in welche es eingesteckt wird, im Wesentlichen durch die radialen Erhebungsstrukturen 17 bestimmt ist.

Der Schaft 3 des Schraubteils 1 weist vorzugsweise wenigstens einen Kunststoff oder wenigstens ein Metall oder eine Metalllegierung auf. Vorzugsweise besteht der Schaft 3 aus wenigstens einem Kunststoff, oder aus wenigstens einem Metall oder wenigstens einer Metalllegierung.

Bevorzugt ist vorgesehen, dass die Hülse 11 in den Gewindeschaft 9 hineinragt, sodass der Hülsenabschnitt 13 und der Gewindeabschnitt 9 an dem Schraubteil 1 überlappen. Dies ermöglicht zusätzlich zu dem durch die radialen Erhebungsstrukturen 17 erzeugten, permanenten Reibmoment ein weiteres Reibmoment, wenn das Schraubteil 1 in ein Innengewinde eingeschraubt wird, wobei dann die Hülse 11 im Bereich des Gewindeabschnitts 9 zurückgestaucht wird, mithin eine axiale Stauchung erfährt, die zu einer insbesondere lokalen Durchmesservergrößerung der Hülse 11 führt. Dieser Effekt kann - wie angesprochen - dazu dienen, das Reibmoment des Schraubteils 1 in einer Bohrung vorteilhaft zu erhöhen. Da mit den radialen Erhebungsstrukturen 17 allerdings ein permanentes Reibmoment bereitgestellt wird, bedarf es dieses zusätzlichen Reibmoments aufgrund des Rückstaucheffekts nicht notwendig, und - sofern es gegeben ist - ist dieses zusätzliche Reibmoment auch von untergeordneter Bedeutung. Daher kommt es nicht erheblich auf eine tatsächliche Länge der Hülse 11 an; insbesondere auch nicht darauf, ob die Hülse 11 tatsächlich mit einem Innengewinde einer Gewindebohrung in Eingriff kommt und zurückgestaucht wird. Daher kann das Schraubteil 1 ohne Änderung insbesondere an der Länge der Hülse 11 für verschiedene Anwendungen, insbesondere für verschieden breite Scharnierteile einer Brille, verwendet werden, sodass die Anzahl der vorzuhaltenden Varianten des Schraubteils 1 reduziert wird.

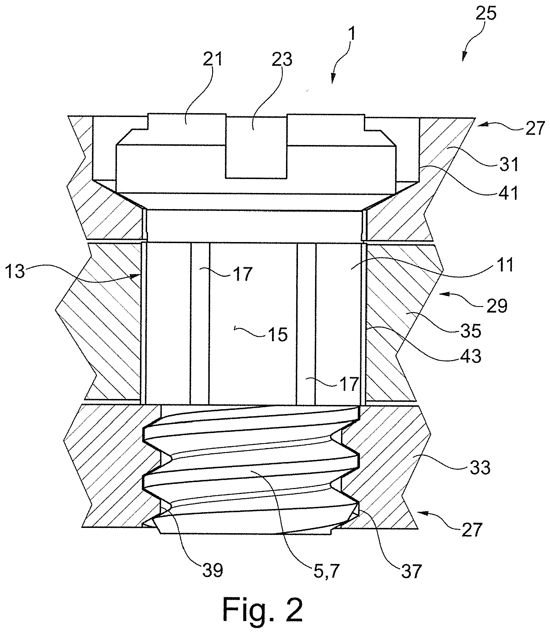

Figur 2 zeigt eine schematische Darstellung eines Ausführungsbeispiels einer Scharnieranordnung 25 mit einem Schraubteil 1 gemäß dem Ausführungsbeispiel von Figur 1. Gleiche und funktionsgleiche Elemente sind mit gleichen Bezugszeichen versehen, sodass insofern auf die vorangegangene Beschreibung verwiesen wird. Die Scharnieranordnung 25 weist ein erstes Scharnierteil 27 und ein zweites Scharnierteil 29 auf. Bei dem hier dargestellten Ausführungsbeispiel der Scharnieranordnung 25 ist das erste Scharnierteil 27 als zweilappiges Scharnierteil ausgebildet und weist einen ersten, hier oberen Scharnierlappen 31, sowie einen zweiten, hier unteren Scharnierlappen 33 auf, wobei zwischen dem ersten Scharnierlappen 31 und dem zweiten Scharnierlappen 33 ein Zwischenraum ausgebildet ist, in dem ein dritter Scharnierlappen 35 des zweiten Scharnierteils 29, welches als einlappiges Scharnierteil ausgebildet ist und insofern nur den dritten Scharnierlappen 35 aufweist, angeordnet ist.

Das erste Scharnierteil 27 weist - hier insbesondere in dem zweiten Scharnierlappen 33 - eine Gewindebohrung 37 mit einem Innengewinde 39 auf. In dem ersten Scharnierlappen 31 weist das erste Scharnierteil 27 hier eine Senkbohrung 41 zur Anordnung des Kopfs 21 des Schraubteils 1 auf.

Das zweite Scharnierteil 29 weist in seinem einzigen, dritten Scharnierlappen 35 eine Durchgangsbohrung 43 auf, die frei ist von einem Innengewinde. Die Scharnierteile 27, 29 sind in dem in Figur 2 dargestellten, montierten Zustand der Scharnieranordnung 25 so relativ zueinander angeordnet und eingerichtet, dass die Durchgangsbohrung 43 mit der Gewindebohrung 37 und insbesondere auch mit der Senkbohrung 41 fluchtet. Weiterhin zeigt sich, dass der Außengewindegang 5 beziehungsweise das Außengewinde 7 so eingerichtet und auf das Innengewinde 39 abgestimmt ist, dass das Außengewinde 7 in montiertem Zustand mit dem Innengewinde 39 des ersten Scharnierteils 27 kämmt. Die Hülse 11 ist so eingerichtet und auf die Durchgangsbohrung 43 abgestimmt, dass sie bereits beim Einstecken des Schraubteils 1 in die Durchgangsbohrung 43 mit dieser in Reibkontakt kommt, insbesondere wenn der Hülsenabschnitt 13 in die Durchgangsbohrung 43 eingeführt wird. Auf diese Weise wird bereits beim Einführen des Schraubteils 1 in die Scharnieranordnung 25 ein permanentes Reibmoment erzeugt.

Die Scharnieranordnung 25 ist vorzugsweise als Brillenscharnier, insbesondere zur gelenkigen Verbindung eines Mittelteils einer Brille mit einem Brillenbügel, ausgebildet.

Die Durchgangsbohrung 43 und die Hülse 11 sind insbesondere so aufeinander abgestimmt, dass beim Einstecken des Schraubteils 1 in die Durchgangsbohrung 43 ein Reibmoment von mindestens 0,3 Ncm bis höchstens 1,0 Ncm, vorzugsweise von mindestens 0,3 Ncm bis höchstens 0,7 Ncm, vorzugsweise von 0,5 Ncm als permanentes Reibmoment zwischen den Erhebungsstrukturen 17 und der Durchgangsbohrung 43 erzeugt wird.

Die Durchgangsbohrung 43 und die äußere Umfangsfläche 15 weisen bevorzugt - außerhalb der Erhebungsstrukturen 17 - eine Toleranz von mindestens bis zu 3 % bis höchstens bis zu 6 %, vorzugsweise von mindestens bis zu 3 % bis höchstens bis zu 4 %, vorzugsweise von bis zu 3,5 %, zueinander auf.

Die Hülse 11 und die Scharnierteile 27, 29 sind bevorzugt so aufeinander abgestimmt, dass die Hülse 11 beim Einschrauben des Außengewindes 7 in die Gewindebohrung 37 axial zumindest bereichsweise gestaucht wird. Es ist aber auch eine Ausgestaltung möglich, bei welcher die Hülse 11 in montiertem Zustand nicht mit dem Innengewinde 39 in Eingriff kommt.

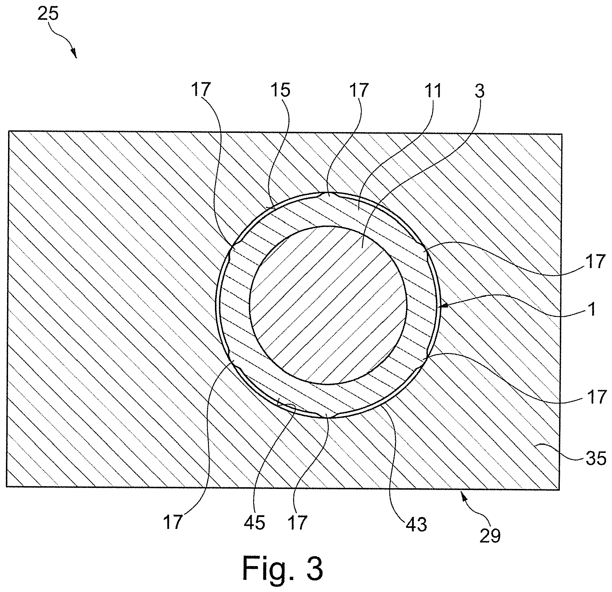

Figur 3 zeigt eine schematische Schnittdarstellung durch das Ausführungsbeispiel der Scharnieranordnung 25 gemäß Figur 2, wobei die Schnittebene senkrecht zu der Bildebene von Figur 2 ausgerichtet und im Bereich des dritten Scharnierlappens 35 angeordnet ist. Gleiche und funktionsgleiche Elemente sind mit gleichen Bezugszeichen versehen, sodass insofern auf die vorangegangene Darstellung verwiesen wird. Es wird deutlich, dass sich die Erhebungsstrukturen 17 bei in die Durchgangsbohrung 43 eingesetztem Schraubteil 1 an eine Innenwandung 45 der Durchgangsbohrung 43 anlegen, wobei sie zumindest teilweise - in radialer Richtung gesehen - elastisch gestaucht werden. Dabei können die Erhebungsstrukturen 17 sowohl Toleranzen bezüglich des Außendurchmessers der Hülse 11 einerseits und der Durchgangsbohrung 43 andererseits als auch Unrundheiten der Durchgangsbohrung 43 ausgleichen. Die an der Innenwandung 45 anliegenden radialen Erhebungsstrukturen 17 erzeugen ein permanentes Reibmoment, welches bereits beim losen Einstecken des Schraubteils 1 in die Durchgangsbohrung 43 wirksam ist. Dieses ist durch die Wahl der Anzahl, Art, Ausbildung und insbesondere Geometrie der radialen Erhebungsstrukturen 17 leicht in definierter Weise einstellbar.

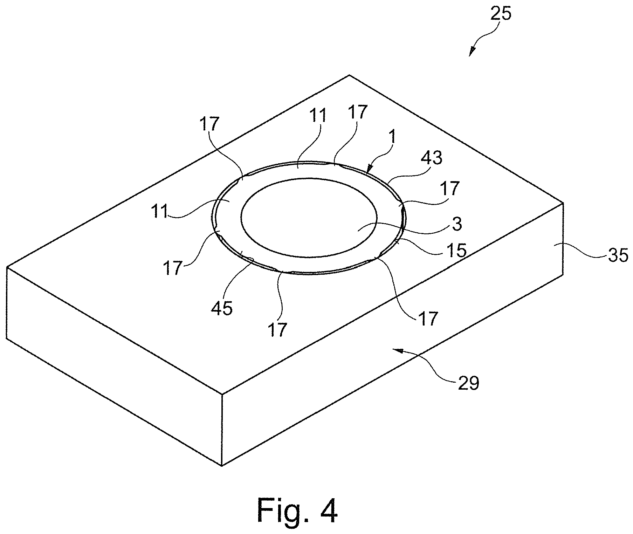

Figur 4 zeigt eine weitere schematische Detaildarstellung des Ausführungsbeispiels der Scharnieranordnung 25 gemäß den Figuren 2 und 3. Gleiche und funktionsgleiche Elemente sind mit gleichen Bezugszeichen versehen, sodass insofern auf die vorangegangene Beschreibung verwiesen wird. Auch aus dieser dreidimensionalen Darstellung wird klar, dass sich die Erhebungsstrukturen 17 an die Innenwandung 45 der Durchgangsbohrung 43 anlegen, wenn die Hülse 11 in die Durchgangsbohrung 43 eingesetzt ist, sodass ein permanentes Reibmoment erzeugt wird.

Insgesamt zeigt sich, dass mit dem hier vorgeschlagenen Schraubteil 1 sowie der Scharnieranordnung 25 ein permanentes Reibmoment in definierter Weise eingestellt werden kann, wobei das Schraubteil 1 überdies verliersicher - noch vor einem eigentlichen Verschrauben - in einer Bohrung angeordnet werden kann.

## Patentansprüche

1. Schraubteil (1), mit
- einem Schaft (3), der in einem Gewindeabschnitt (9) zumindest bereichsweise wenigstens einen Außengewindegang (5) aufweist, und mit
- einer den Schaft (3) in Umfangsrichtung um mehr als drei Viertel des Umfangs umgreifenden Hülse (11), wobei
- die Hülse (11) sich in Längsrichtung des Schafts (3) entlang eines Hülsenabschnitts (13) erstreckt,
**dadurch gekennzeichnet, dass**
- die Hülse (11) an einer äußeren Umfangsfläche (15) wenigstens eine radiale Erhebungsstruktur (17) aufweist, wobei
- die wenigstens eine radiale Erhebungsstruktur (17) wenigstens ein in radialer Richtung elastisch ausgebildetes Strukturelement (19) aufweist, wobei
- die wenigstens eine radiale Erhebungsstruktur (17) eine Erstreckung entlang der Längsrichtung auf der äußeren Umfangsfläche (15) der Hülse (11) aufweist, die größer ist als eine Breite (B) des wenigstens einen Strukturelements (19).

2. Schraubteil (1) nach Anspruch 1, **dadurch gekennzeichnet, dass** sich die wenigstens eine Erhebungsstruktur (17)
a) entlang von wenigstens zwei Dritteln der in Längsrichtung gemessenen Höhe der Hülse (11), oder
b) vollständig über die gesamte in Längsrichtung gemessene Höhe der Hülse (11) erstreckt.

3. Schraubteil (1) nach einem der vorhergehenden Ansprüche, **dadurch gekennzeichnet, dass** die wenigstens eine Erhebungsstruktur
a) eine sich in Längsrichtung erstreckende Rippe, und/oder
b) eine Mehrzahl von Noppen, und/oder
c) eine gerade, schraubenförmige oder konische Erhebung aufweist, und/oder, dass
d) das wenigstens eine Strukturelement (19) - im Querschnitt und/oder im Längsschnitt gesehen - eine gerundete, insbesondere teilzylindrische, teilsphärische, teilkonische oder eckige Kontur aufweist.

4. Schraubteil (1) nach einem der vorhergehenden Ansprüche, **dadurch gekennzeichnet, dass** das Schraubteil (1) eine Mehrzahl von Erhebungsstrukturen (17) aufweist, wobei die Erhebungsstrukturen (17) vorzugsweise symmetrisch entlang einer Umfangslinie der Hülse (11) angeordnet sind.

5. Schraubteil (1) nach einem der vorhergehenden Ansprüche, **dadurch gekennzeichnet, dass** die Hülse (11) insgesamt elastisch ausgebildet ist.

6. Schraubteil (1) nach einem der vorhergehenden Ansprüche, **dadurch gekennzeichnet, dass** die Hülse (11) wenigstens einen Kunststoff aufweist oder aus wenigstens einem Kunststoff besteht.

7. Schraubteil (1) nach einem der vorhergehenden Ansprüche, **dadurch gekennzeichnet, dass** der Schaft (3) in dem Hülsenabschnitt (13) mit der Hülse (11) umspritzt ist.

8. Schraubteil (1) nach einem der vorhergehenden Ansprüche, **dadurch gekennzeichnet, dass** der Schaft (3) wenigstens einen Kunststoff, ein Metall oder eine Metalllegierung aufweist, oder dass der Schaft (3) aus wenigstens einem Kunststoff, wenigstens einem Metall oder wenigstens einer Metalllegierung besteht.

9. Schraubteil (1) nach einem der vorhergehenden Ansprüche, **dadurch gekennzeichnet, dass** die Hülse (11) in den Gewindeabschnitt (9) des Schafts (3) hineinragt.

10. Scharnieranordnung (25), mit
- einem ersten, eine Gewindebohrung (37) aufweisenden Scharnierteil (27),
- einem zweiten, eine Durchgangsbohrung (43) aufweisenden Scharnierteil (29), wobei
- die Durchgangsbohrung (43) und die Gewindebohrung (37) eingerichtet sind, um in montiertem Zustand der Scharnieranordnung (25) miteinander zu fluchten,
**gekennzeichnet durch,**
- ein Schraubteil (1) nach einem der Ansprüche 1 bis 9, wobei
- der wenigstens eine Außengewindegang (5) des Schraubteils (1) eingerichtet ist, um mit einem Innengewinde der Gewindebohrung (37) zu kämmen, und wobei
- die Hülse (11) eingerichtet ist, um in Reibkontakt mit der Durchgangsbohrung (43) zu sein, wenn der Hülsenabschnitt (13) des Schraubteils (1) in die Durchgangsbohrung (43) eingeführt ist.

11. Scharnieranordnung (25) nach Anspruch 10, **dadurch gekennzeichnet, dass** die Durchgangsbohrung (43) und die Hülse (11) so aufeinander abgestimmt sind, dass ein Reibmoment von mindestens 0,3 Ncm bis höchstens 1,0 Ncm, vorzugsweise von mindestens 0,3 Ncm bis höchstens 0,7 Ncm, vorzugsweise von 0,5 Ncm, erzeugt wird, wenn die Hülse (11) in der Durchgangsbohrung (43) angeordnet ist.

12. Scharnieranordnung (25) nach einem der Ansprüche 10 und 11, **dadurch gekennzeichnet, dass** die Durchgangsbohrung (43) des zweiten Scharnierteils (29) und die äußere Umfangsfläche (15) der Hülse (11) außerhalb der wenigstens einen Erhebungsstruktur (17) eine Toleranz von mindestens bis zu 3% bis höchstens bis zu 6 %, vorzugsweise von mindestens bis zu 3 % bis höchstens bis zu 4 %, vorzugsweise von bis zu 3,5 %, zueinander aufweisen.

13. Scharnieranordnung (25) nach einem der Ansprüche 10 bis 12, **dadurch gekennzeichnet, dass** die Hülse (11) und die Scharnierteile (27,29) so aufeinander abgestimmt sind, dass die Hülse (11) beim Einschrauben des wenigstens einen Außengewindegangs (5) in die Gewindebohrung (37) axial zumindest bereichsweise gestaucht wird.

14. Scharnieranordnung (25) nach einem der Ansprüche 10 bis 13, **dadurch gekennzeichnet, dass** die Scharnieranordnung (25) als Scharnieranordnung für eine Brille ausgebildet ist.

15. Scharnieranordnung (25) nach einem der Ansprüche 10 bis 14, **dadurch gekennzeichnet, dass** das erste Scharnierteil (27) mehrlappig ausgebildet ist.

## Claims

1. A screw part (1) having
- a shank (3) which at least partially has at least one external thread turn (5) in a threaded portion (9), and
- a sleeve (11) surrounding the shank (3) in a circumferential direction around more than three-fourths of the circumference, wherein
- the sleeve (11) extends along a sleeve portion (13) in a longitudinal direction of the shank (3),
**characterized in that**
- the sleeve (11) has at least one radial elevation structure (17) on an outer circumferential face (15), wherein
- the at least one radial elevation structure (17) has at least one structural element (19) having an elastic design in the radial direction, wherein
- the at least one radial elevation structure (17) has an extent, on the outer circumferential face (15) of the sleeve (11) along the longitudinal direction, that is greater than a width (B) of the at least one structural element (19).

2. The screw part (1) according to claim 1, **characterized in that** the at least one elevation structure (17) extends
a) along at least two-thirds of the height of the sleeve (11), measured in the longitudinal direction, or
b) extends completely over the entire height of the sleeve (11), measured in the longitudinal direction.

3. The screw part (1) according to one of the preceding claims, **characterized in that** the at least one elevation structure
a) has a rib extending in the longitudinal direction, and/or
b) has a plurality of knobs, and/or
c) has a linear, helical, or conical elevation, and/or
d) the at least one structural element (19), viewed in the cross section and/or in the longitudinal section, has a rounded, in particular partially cylindrical, partially spherical, partially conical, or angular contour.

4. The screw part (1) according to one of the preceding claims, **characterized in that** the screw part (1) has a plurality of elevation structures (17), the elevation structures (17) preferably being arranged symmetrically along a circumferential line of the sleeve (11).

5. The screw part (1) according to one of the preceding claims, **characterized in that** the sleeve (11) as a whole has an elastic design.

6. The screw part (1) according to one of the preceding claims, **characterized in that** the sleeve (11) contains at least one plastic or is made of at least one plastic.

7. The screw part (1) according to one of the preceding claims, **characterized in that** the shank (3) in the sleeve portion (13) is extrusion-coated with the sleeve (11).

8. The screw part (1) according to one of the preceding claims, **characterized in that** the shank (3) contains at least one plastic, at least one metal, or at least one metal alloy, or that the shank (3) is made of at least one plastic, at least one metal, or at least one metal alloy.

9. The screw part (1) according to one of the preceding claims, **characterized in that** the sleeve (11) protrudes into the threaded portion (9) of the shank (3).

10. A hinge arrangement (25) having
- a first hinge part (27) with a threaded bore (37),
- a second hinge part (29) with a through hole (43), wherein
- the through hole (43) and the threaded bore (37) are configured to align with one another in the mounted state of the hinge arrangement (25),
**characterized by**
- a screw part (1) according to one of claims 1 to 9, wherein
- the at least one external thread turn (5) of the screw part (1) is configured to engage with an internal thread of the threaded bore (37), and wherein
- the sleeve (11) is configured to be in frictional contact with the through hole (43) when the sleeve portion (13) of the screw part (1) is inserted into the through hole (43).

11. The hinge arrangement (25) according to claim 10, **characterized in that** the through hole (43) and the sleeve (11) are matched to one another in such a way that a friction torque of at least 0.3 Ncm to 1.0 Ncm maximum, preferably at least 0.3 Ncm to 0.7 Ncm maximum, preferably 0.5 Ncm, is generated when the sleeve (11) is situated in the through hole (43).

12. The hinge arrangement (25) according to one of claims 10 and 11, **characterized in that** the through hole (43) of the second hinge part (29) and the outer circumferential face (15) of the sleeve (11) outside the at least one elevation structure (17) have a tolerance of up to at least 3% up to 6% maximum, preferably up to at least 3% to 4% maximum, preferably up to 3.5%, with respect to one another.

13. The hinge arrangement (25) according to one of claims 10 to 12, **characterized in that** the sleeve (11) and the hinge parts (27, 29) are matched to one another in such a way that the sleeve (11) is axially compressed, at least in areas, when the at least one external thread turn (5) is screwed into the threaded bore (37).

14. The hinge arrangement (25) according to one of claims 10 to 13, **characterized in that** the hinge arrangement (25) is designed as a hinge arrangement for eyeglasses.

15. The hinge arrangement (25) according to one of claims 10 to 14, **characterized in that** the first hinge part (27) has a multi-tab design.

## Revendications

1. Élément de vissage (1), avec
- une tige (3), laquelle comprend au moins un filetage extérieur (5) au moins par endroits dans une partie filetée (9), et avec
- une douille (11) entourant la tige (3) dans la direction périphérique sur plus de trois quarts de la circonférence, dans lequel
- la douille (11) s'étend le long d'une partie de douille (13) dans la direction longitudinale de la tige (3),
**caractérisé en ce que**
- la douille (11) comporte au moins une structure en relief radiale (17) sur une surface périphérique extérieure (15), dans lequel
- l'au moins une structure en relief radiale (17) comporte au moins un élément de structure (19) réalisé comme élastique dans la direction radiale, dans lequel
- l'au moins une structure en relief radiale (17) comporte sur la surface périphérique extérieure (15) de la douille (11), le long de la direction longitudinale, une extension qui est supérieure à une largeur (B) de l'au moins un élément de structure (19).

2. Élément de vissage (1) selon la revendication 1, **caractérisé en ce que** l'au moins une structure en relief (17) s'étend
a) sur au moins deux tiers de la hauteur de la douille (11) mesurée dans la direction longitudinale, ou
b) complètement sur la totalité de la hauteur de la douille (11) mesurée dans la direction longitudinale.

3. Élément de vissage (1) selon l'une des revendications précédentes, **caractérisé en ce que** l'au moins une structure en relief comporte
a) une nervure s'étendant dans la direction longitudinale, et/ou
b) une pluralité de protubérances, et/ou
c) un relief droit, hélicoïdal ou conique, et/ou **en ce que**
d) l'au moins un élément de structure (19) comporte, vu en coupe et/ou dans la longueur, un contour arrondi, en particulier partiellement cylindrique, partiellement sphérique, partiellement conique ou carré.

4. Élément de vissage (1) selon l'une des revendications précédentes, **caractérisé en ce que** l'élément de vissage (1) comporte une pluralité de structures en relief (17), dans lequel les structures en relief (17) sont agencées de préférence symétriquement le long d'une ligne périphérique de la douille (11).

5. Élément de vissage (1) selon l'une des revendications précédentes, **caractérisé en ce que** la douille (11) est réalisée comme totalement élastique.

6. Élément de vissage (1) selon l'une des revendications précédentes, **caractérisé en ce que** la douille (11) comporte au moins un plastique ou est constituée d'au moins un plastique.

7. Élément de vissage (1) selon l'une des revendications précédentes, **caractérisé en ce que** la tige (3) est surmoulée avec la douille (11) dans la partie de douille (13).

8. Élément de vissage (1) selon l'une des revendications précédentes, **caractérisé en ce que** la tige (3) comporte au moins un plastique, un métal ou un alliage métallique, ou **en ce que** la tige (3) est constituée d'au moins un plastique, d'au moins un métal ou d'au moins un alliage métallique.

9. Élément de vissage (1) selon l'une des revendications précédentes, **caractérisé en ce que** la douille (11) fait saillie dans la partie filetée (9) de la tige (3).

10. Ensemble charnière (25), avec
- un premier élément de charnière (27) comportant un trou fileté (37),
- un deuxième élément de charnière (29) comportant un trou traversant (43), dans lequel
- le trou traversant (43) et le trou fileté (37) sont disposés de façon à être alignés dans l'état monté de l'ensemble charnière (25),
**caractérisé par**
- un élément de vissage (1) selon l'une des revendications 1 à 9, dans lequel
- l'au moins un filetage extérieur (5) de l'élément de vissage (1) est disposé de façon à engrener avec un filetage intérieur du trou fileté (37), et dans lequel
- la douille (11) est disposée de façon à être en contact avec friction avec le trou traversant (43) lorsque la partie de douille (13) de l'élément de vissage (1) est insérée dans le trou traversant (43).

11. Ensemble charnière (25) selon la revendication 10, **caractérisé en ce que** le trou traversant (43) et la douille (11) sont adaptés l'une à l'autre de façon à obtenir un couple de friction d'au moins 0,3 Ncm à au plus 1,0 Ncm, de préférence d'au moins 0,3 Ncm à au plus 0,7 Ncm, de préférence de 0,5 Ncm, lorsque la douille (11) est agencée dans le trou traversant (43).

12. Ensemble charnière (25) selon l'une des revendications 10 et 11, **caractérisé en ce que** le trou traversant (43) du deuxième élément de charnière (29) et la surface périphérique extérieure (15) de la douille (11) comportent à l'extérieur de l'au moins une structure en relief (17) une tolérance l'une à l'autre d'au moins jusqu'à 3 % à au plus jusqu'à 6 %, de préférence d'au moins jusqu'à 3 % à au plus jusqu'à 4 %, de préférence de jusqu'à 3,5 %.

13. Ensemble charnière (25) selon l'une des revendications 10 à 12, **caractérisé en ce que** la douille (11) et les éléments de charnière (27, 29) sont adaptés l'un à l'autre de sorte que la douille (11) est comprimée axialement au moins en partie lors du vissage de l'au moins filetage extérieur (5) dans le trou fileté (37).

14. Ensemble charnière (25) selon l'une des revendications 10 à 13, **caractérisé en ce que** l'ensemble charnière (25) est réalisé comme ensemble charnière pour une paire de lunettes.

15. Ensemble charnière (25) selon l'une des revendications 10 à 14, **caractérisé en ce que** le premier élément de charnière (27) est réalisé comme polylobé.
